# EUROPÄISCHE PATENTSCHRIFT

(11) **EP 1 800 790 B1**
(45) Veröffentlichungstag und Bekanntmachung des Hinweises auf die Patenterteilung: **19.03.2008**
(21) Anmeldenummer: 07007304.4
(22) Anmeldetag: 09.05.2005
(51) Int. Cl.: B23K 26/14, B23K 26/32, B23K 26/24, B23K 28/02, B23K 9/173, B23K 35/30, B23K 35/02, B23K 26/42

(54) **Verfahren zum Starten eines Laser-Hybrid-Schweissprozesses zum Schweissen von beschichteten Blechen mit einer Vor-Rückbewegung des eingeschalteten Lasers zum Verdampfen der Beschichtung**
Process of starting a hybrid laser welding process for welding of coated metal sheets with a backward and forward motion of the laser beam for evaporating the coating
Procédé de démarrage d'un procédé de soudage laser hybride pour souder des tôles revétues avec un mouvement de va-et-vient du faisceau laser pour évaporer le revêtement

(30) Priorität: 10.05.2004 AT 8022004
(43) Veröffentlichungstag der Anmeldung: 27.06.2007
(62) Teilanmeldung aus: 05738241.8
(73) Patentinhaber: Fronius International GmbH, 4643 Pettenbach (AT)
(72) Erfinder: Miessbacher, Gerhard, 4600 Thalheim/Wels (AT); Rührnössl, Manfred, 4030 Linz (AT)
(74) Vertreter: Sonn & Partner Patentanwälte

(56) Entgegenhaltungen:
- WO-A-01/17722
- WO-A-03/031111
- PATENT ABSTRACTS OF JAPAN Bd. 2002, Nr. 10, 10. Oktober 2002 (2002-10-10) -& JP 2002 160082 A (NKK CORP), 4. Juni 2002 (2002-06-04)
- DATABASE WPI Week 199528 Derwent Publications Ltd., London, GB; AN 1988-172857 XP002431759 -& JP 07 055386 B (TOYO KOGYO CO) 14. Juni 1995 (1995-06-14)
- PATENT ABSTRACTS OF JAPAN Bd. 009, Nr. 279 (M-427), 7. November 1985 (1985-11-07) -& JP 60 121093 A (MITSUBISHI HEAVY IND LTD), 28. Juni 1985 (1985-06-28)

## Beschreibung

Die Erfindung betrifft ein Verfahren zum Starten eines Laser-Hybrid-Schweißprozesses zum Schweißen von beschichteten Blechen, wobei zumindest ein Laserprozess mit einem Laser und ein Schutzgasschweißprozess mit einer Schutzgaseinheit durchgeführt wird und der Laserprozess dem Schutzgasschweißprozess voreilt, und der Schutzgasschweißprozess im Nahbereich des Lasers positioniert wird, wobei über den Schutzgasschweißprozess ein Zusatzwerkstoff an die Schweißstelle zugeführt wird (siehe, z.B., JP 2002/160082 A).

Es sind bereits Verfahren zum Verschweißen von beschichteten Blechen, welche beispielsweise in der Automobilindustrie verwendet werden, bekannt.

Beispielsweise beschreibt die DE 101 51 257 A1 ein Verfahren zum Verbinden von gespannten und positionierten losen Karosserieteilen einer Fahrzeugkarosserie in einer Framingstation, bei welchem die Karosserieteile durch Hybridschweißen mit mindestens einem Laserstrahl und mit mindestens einem Lichtbogen geschweißt werden.

Kombinierte Laser-Lichtbogenschweißgeräte, so genannte Laser-Hybrid-Schweißeinheiten kombinieren die Vorteile des Lasers, wie Schnelligkeit und gute Wärmeeinbringung in das Werkstück mit den Vorteilen herkömmlicher Schweißverfahren, z.B. dem MIG-(Metall-Inert-Gas)Schweißverfahren, wie beispielsweise eine gute Spaltüberbrückbarkeit. Beispielsweise beschreiben die US 2001/050273 A1, die US 2001/052511 A1, die US 2001/047984 A1, die US 2003/173343 A1 sowie die US 2002/008094 A1 Laser-Hybrid-Schweißverfahren, bei welchen zumindest ein Laserprozess und ein Schutzgasschweißprozess durchgeführt wird. Zwar wird darauf eingegangen, dass auch beschichtete Werkstücke miteinander verschweißt werden können, nicht jedoch die Probleme, welche durch das Verdampfen der Beschichtung auftreten erörtert bzw. eine Lösung zur Behebung dieses Problems vorgeschlagen.

Grundsätzlich ist zu dem aus dem Stand der Technik bekannten Verfahren zu erwähnen, dass in der Praxis hierzu eine Nahtvorbereitung notwendig ist, bei der ein Gasverdampfungsspalt bzw. Ausgasungsraum zwischen den Blechen geschaffen werden muss, damit die bei der Schweißung entstehenden Gase austreten können. Weiters wird in der Praxis meist eine Nachbearbeitung der Schweißnaht durchgeführt, um eine dichte Schweißnaht zu erreichen, d.h., dass nach dem automatisierten Schweißprozess von Hand eine Nachschweißung durchgeführt wird, um die entstandenen Einschlüsse, Krater oder Löcher zu schließen.

Die Aufgabe der vorliegenden Erfindung besteht daher in der Schaffung einer verbesserte Zündung für einen Laser-Hybrid-Schweißprozess.

Die erfindungsgemäße Aufgabe wird dadurch gelöst, dass beim Start des Laserprozesses der Brennpunkt des Lasers in einem definierten Abstand zur Oberfläche des vom Laser aus gesehenen ersten Bleches eingestellt wird und der Laser eine voreinstellbare Längsbewegung in Richtung der Schutzgaseinheit und anschließend zur Ausgangsposition zurück durchführt, wobei während der Vor-Rückbewegung des Lasers die Laserleistung derart geregelt wird, dass zumindest die Beschichtung der Bleche verdampft bzw. geschmolzen wird und somit die Oberfläche des vom Laser aus gesehenen ersten Bleches durch den Laser von Verunreinigungen und/oder Beschichtungen befreit wird. Der Vorteil liegt dabei darin, dass das Zündverfahren des dem Laser nachgereihten Schutzgasschweißprozesses wesentlich erleichtert und verbessert wird. Dies wird insofern erreicht, da durch die Laserbewegung und das Wegschmelzen bzw. Verdampfen von Verunreinigungen an der Blechoberfläche eine sehr gute elektrisch leitfähige Spur geschaffen wird, so dass bei einem darauf folgenden Zünden des Lichtbogens eine stabile und sichere Zündung in diesem Bereich möglich ist. Somit braucht auch keine Vorreinigung der Bleche mehr durchgeführt werden.

Von Vorteil ist aber auch eine Maßnahme, bei welcher der Brennpunkt des Lasers nach der Vor-/Rückbewegung des Lasers, auf eine für das Laserschweißverfahren eingestellte bzw. definierte Distanz zur Oberfläche des vom Laser aus gesehenen ersten Bleches verändert wird, da dadurch für den Laser-Hybrid-Schweißprozess die volle Energie für die Schweißung zur Verfügung steht.

Eine Maßnahme, bei welcher nach Beendigung der Startphase der Schutzgasschweißprozess gestartet wird und eine Zündung des Lichtbogens erfolgt, und gleichzeitig mit oder anschließend an dem Start des Schutzgasschweißprozesses die Laserleistung auf die voreingestellte Leistung für den anschließend durchzuführenden Schweißprozess verändert wird, ist von Vorteil, da dadurch eine Verzögerung zwischen dem Startprozess und dem darauffolgenden Schweißprozess vermieden wird und sofort auf dem zuvor gereinigten Blech der Schweißprozess durchgeführt wird. Somit ist es beispielsweise nicht mehr möglich, Verschmutzungen auf das zu verschweißende Blech zu bekommen.

Weiters ist eine Maßnahme, bei welcher die zurückzulegende Distanz für die Längsbewegung in der Startphase in Abhängigkeit eines Abstandes zwischen der Lasereinheit und der Schutzgaseinheit gewählt wird, so dass der Lichtbogen sicher im Bereich des aufgeschmolzenen Bleches gezündet wird und die Distanz zwischen 0 und 15 mm, bevorzugt zwischen 0 und 6 mm, beträgt, von Vorteil. Dadurch ist sichergestellt, dass ein optimaler Verfahrensweg geschaffen wird und somit die Zeitdauer für die Startphase verkürzt werden kann. Ein weiterer Vorteil liegt darin, dass beispielsweise vermieden wird, dass bei einer zu kurzen Rückwärtsbewegung der Lichtbogen nicht im gereinigten Bereich zündet.

Eine weitere Maßnahme ist von Vorteil, bei welcher die Bewegung des Laser-Hybrid-Schweißbrenners robotergesteuert über einen Roboter erfolgt, da dadurch lediglich in der Steuervorrichtung des Roboters oder eines Schweißgerätes die Routine zur Durchführung der Startphase hinterlegt werden kann und somit der Roboter die Bewegung des Laser-Hybrid-Schweißkopfes automatisch durchführt.

Die vorliegende Erfindung wird anhand der beigefügten Zeichnungen näher erläutert.

Darin zeigen:
Fig. 1 eine schematische Darstellung eines Laser-Hybrid-Schweißkopfes;
Fig. 2 Strom-, Spannungs- und Bewegungsdiagramme eines Kalt-Metall-Transfer-Schweißprozesses und ein Strom-Zeitdiagramm eines Laserprozesses, sowie eine Draufsicht auf die verschweißten Bleche in vereinfachter Darstellung;
Fig. 3 Strom-, Spannungs- und Bewegungsdiagramme eines Puls-schweißprozesses und ein Strom-Zeitdiagramm eines Laserprozesses, sowie eine Draufsicht auf die verschweißten Bleche, vereinfacht und schematisch dargestellt;
Fig. 4 eine Kehlnaht in geschnittener und vereinfachter schematischer Darstellung;
Fig. 5 eine mittels Laser geschweißte I-Naht in geschnittener und vereinfachter schematischer Darstellung;
Fig. 6 eine im Laser-Hybrid Schweißverfahren geschweißte I-Naht in geschnittener und vereinfachter schematischer Darstellung;
Fig. 7 die Startphase und
Fig. 8 den Start für den Laser-Hybrid-Schweißprozess gemäß der Erfindung in schematischer und vereinfachter Darstellung.

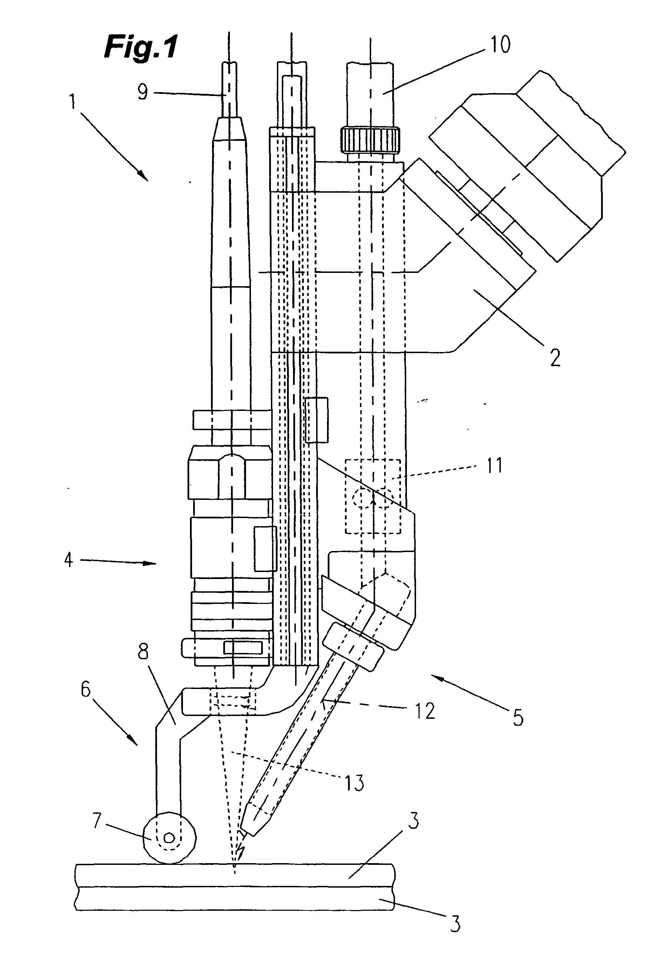

In Fig. 1 ist ein Laser-Hybrid-Schweißkopf 1 bzw. Laser-Hybrid-Schweißbrenner, welcher beispielsweise an einem Roboterarm 2 angeordnet ist, zum Verschweißen von beschichteten Blechen 3, wie diese in der Autoindustrie verwendet werden, vereinfacht und schematisch dargestellt. Dabei weisen die Bleche 3 bevorzugt eine Zinkbeschichtung auf. Der Laser-Hybrid-Schweißkopf 1 ist aus zumindest einer Lasereinheit 4 und zumindest einer Schutzgaseinheit 5 gebildet.

Die Bleche 3 werden unbearbeitet, bzw. unvorbereitet zueinander gehalten. Das bedeutet, dass zum Verschweißen der Bleche 3 keine spezielle Vorbereitung bzw. Bearbeitung für die Schweißnaht benötigt bzw. getroffen werden müssen, um beispielsweise austretende Zinkdämpfe abzuführen, wie dies aus dem Stand der Technik bekannt ist. Die Bleche 3 werden einfach übereinander angeordnet, ohne beispielsweise einen Vergasungsspalt für das Zink zwischen den Blechen 3 zu bilden, wie dies aus dem Stand der Technik bekannt ist. Somit wird in einfacher Art und Weise schon bei der Vorbereitung der Bleche 3 zum Verschweißen eine wesentliche Zeit- und Kostenersparnis erreicht.

Die Bleche 3 werden also übereinander und in der für die Schweißung richtigen Position angeordnet und danach beispielsweise mit Hilfe von Spannvorrichtungen 6 auf dieser Position gehalten. Im dargestellten Ausführungsbeispiel ist die Spannvorrichtung 6 aus einer Rolle 7 gebildet, welche am Laser-Hybrid-Schweißkopf 1 angeordnet ist und im Nahbereich der Laser-Hybrid-Schweißung mittels einem Spannbügel 8 auf die Bleche 3 drückt. Der Laser-Hybrid-Schweißkopf 1 wird also nach der richtigen Positionierung in Richtung der Bleche 3 bis zur Kontaktierung der Spannvorrichtung 6, also der Rolle 7 bewegt. Durch die Rolle 7 werden die Bleche 3 im Bereich der Schweißung gegeneinander gedrückt, sodass ein annähernd spaltfreies Positionieren der Bleche 3 zueinander, also ein Spalt von Null bzw. nahezu Null mm zwischen den Blechen 3, erreicht wird. Dadurch werden die Bleche 3 nur in jenem Bereich, in welchem tatsächlich geschweißt wird, zueinander gehalten, wodurch natürlich der Aufwand der Vorbereitungen der Bleche 3 zum Schweißen wesentlich minimiert wird.

Für die Lasereinheit 4 des Laser-Hybrid-Schweißkopfs 1 kann jeder aus dem Stand der Technik bekannte Laser verwendet werden, wie beispielsweise Eximerlaser (z.B. ArF, KrF, XeCl), Festkörperlaser (z.B. Rubin, Nd:YAG, Nd-Glas), Halbleiterlaser (GaAs, GaAlAs) und Gaslaser (CO₂). Die Schutzgaseinheit 5 wird aus einem MIG/MAG-Schweißbrenner für einen MIG/MAG-Schweißprozess gebildet. Natürlich ist auch beispielsweise ein sogenannter Kalt-Metall-Transfer-Schweißprozess in Kombination mit dem Laserprozess einsetzbar, wie er in einer der nachfolgenden Figuren noch genauer beschrieben wird.

Der Laser-Hybrid-Schweißkopf 1 wird dabei bevorzugt auf einem Roboterarm 2 eines Schweißroboters angeordnet, wie er in der Autoindustrie eingesetzt wird, wo die zu verschweißenden Bleche 3 bzw. Bauteile in den seltensten Fällen zweidimensional ausgebildet sind. Mit herkömmlichen Schweißverfahren für zinkbeschichtete Bleche 3 konnte die Schweißung durch den Schweißroboter nicht den Ansprüchen des Benutzers entsprechend durchgeführt werden und es war nach der Laserschweißung des Schweißroboters eine weitere manuelle Schweißung notwendig, um die nötige Stabilität und/oder Dichtheit der Schweißnaht zu gewährleisten. Ein wesentlicher Vorteil besteht daher darin, dass mit diesem Verfahren nunmehr die Schweißung in einem Arbeitsschritt durchgeführt werden kann, wobei eine hohe Festigkeit und eine Dichtheit der Schweißnaht erzielt wird.

Der Laser-Hybrid-Schweißkopf 1, bzw. die Lasereinheit 4 und die Schutzgaseinheit 5 sind beispielsweise über zwei unabhängige Schlauchpakete 9, 10, welche jeweils zumindest eine Einheit des Laser-Hybrid-Schweißkopfes 1 mit den für den jeweiligen Schweißprozess notwendigen Mitteln, beispielsweise Strom und Spannung, Kühlflüssigkeit, Schweißdrahtzufuhr, usw. versorgen, mit einem Schweißgerät und/oder einer Stromquelle und/oder einem Drahtvorrat verbunden, wobei diese in der gezeigten Ausführung nicht dargestellt sind. Die Schutzgaseinheit 5 weist weiters eine Drahtfördervorrichtung 11 auf, mit welcher ein Zusatzwerkstoff, insbesondere ein Schweißdraht 12 in Richtung der Bleche 3 gefördert wird. Bevorzugt weist der Zusatzwerkstoff bzw. der Schweißdraht 12 die Bestandteile Zink und Kohlenstoff und Aluminium auf. Vorteilhafterweise wird als Schweißdraht 12 ein Fülldraht mit der Bezeichnung SAF DUAL ZN^{®} verwendet. Natürlich ist es auch möglich, einen Schweißdraht 12 mit ähnlichen Zusatzwerkstoffen anzuwenden.

Wesentlich bei diesem Verfahren ist der Einsatz eines speziellen Zusatzwerkstoffes bzw. Schweißdrahtes 12 beim Verschweißen von verzinkten Blechen 3, wodurch während des Schweißprozesses das von den Blechen 3 verdampfende Zink keine Auswirkungen auf die Schweißnaht 12 hat. Dies wird bevorzugt durch den Einsatz eines Schweißdrahtes 12 mit der Bezeichnung SAF DUAL ZN^{®} erreicht. Hierzu ist noch wesentlich, dass die Energieeinbringung über den Schutzgasschweißprozess möglichst niedrig gehalten werden soll, um einen möglichst geringen Verzug und gute mechanisch technologische Eigenschaften zu erreichen.

Während des Schweißprozesses werden die Bleche 3 vom Laser 13 aufgeschmolzen bzw. durchgeschweißt und dabei die Zinkbeschichtung der Bleche 3 gelöst bzw. verdampft. Mit dem darauf folgenden Schutzgasschweißprozess wird durch Einbringung von Zusatzmaterial die Laserschweißung bzw. die Laserspur aufgefüllt bzw. verschlossen und die Bleche 3 dicht miteinander verschweißt.

Nachfolgend sind Parameter und/oder Einstellungen zur Veranschaulichung und Anwendung des Verfahrens beschrieben. Dabei zeigen diese nur eine Variante für eine bestimmte Anwendung, welche für andere Anwendungen, insbesondere andere Bleche, abgeändert werden können.

Beispielsweise erhält man sehr gute Schweißergebnisse, bei Zwei-Blechverbindungen, insbesondere mit einer Kehlnaht am Überlappstoß oder einer Stumpfnaht oder einer Stichnaht am Überlappstoß, wobei die Blechverbindungen zwischen 0,5 und 2 mm an elektrolytisch verzinkten und an feuerverzinkten Blechen erfolgt. Es wird ein Brennpunktdurchmesser von 0,4 bis 1,4 mm gewählt, wobei der Abstand zwischen Brennpunkt und Auftreffen des Zusatzwerkstoffes(Schweißprozessabstand) 0 bis 5 mm betragen kann. Die Leistung des Lasers P_{L} beträgt zwischen 3 und 4 kW. Die Einstellungen an der Stromquelle der Schutzgaseinheit können derart erfolgen:
V_{D}(Schweißdrahtfördergeschwindigkeit) = 1 bis 10 m/min;
d_{D}=(Schweißdraht-Durchmesser) = 1,0 bis 1,2 mm;
I(Schweißstrom) = zwischen 40 und 260 A.

Dabei können sowohl Zwei-Komponentengase, als auch Drei-Komponentengase für diese Anwendungen verwendet werden. Ein Zwei-Komponentengas kann beispielsweise aus 96% Ar 4% O₂ oder ein Drei-Komponentengas wie z.B. DIN EN 439 - M14 (82 Vol. % Ar + 14 Vol. % CO₂ + 4 Vol. % O₂) mit Abweichungen von ± 3 % zusammengesetzt sein.

Für die in der Autoindustrie meistverwendetsten Bleche 3 kann beispielsweise eine Einstellung des Schweißprozesses derart erfolgen, wie in den beiden Beispielen 1 und 2 erläutert (darin bedeuten vₛ die Schweißgeschwindigkeit, v_{D} die Drahtfördergeschwindigkeit, I den Schweißstrom, U die Schweißspannung und P_{L} die Laserleistung):

### Beispiel 1:

elektrolytischer Zinküberzug ZE75/75 nach EN 10152
Stichnaht am Überlappstoss:
Schweißdraht: SAF DUAL ZN^{®}
vₛ: 3 m/min
I:50A
v_{D}: 1,6m/min
U:12,2 V
Abstand: 2 mm
P_{L}: 3,9 kW
Brennpunktdurchmesser: 0,8 mm

### Beispiel 2:

Z 100 feuerverzinkter Zinküberzug: Zinkschichtdicke: 7,5 µm Stumpfnaht
Schweißdraht: SAF DUAL ZN^{®}
vₛ: 2,4m/min
I:50A
v_{D} 1, 6m/min
U:12,2 V
Abstand: 2 mm
P_{L}: 3,9 kW
Brennpunktdurchmesser: 0,8 mm

Damit werden sehr gute und vor allem dichte Schweißnähte erzielt, die in einem Arbeitsschritt, also in einem Schweißprozess, über den Laser-Hybrid-Schweißprozess hergestellt werden können, ohne dass eine Nachbearbeitung der Schweißnaht erforderlich ist. Selbstverständlich können auch bei Änderung eines oder mehrerer Parameter die selben Schweißergebnisse erzielt werden. Beispielsweise wird durch Abänderung zusammenwirkender Parameter, wie beispielsweise Schweißdrahtfördergeschwindigkeit (v_{D}), Schweißstromamplitude (I), usw., wiederum die gleich gute Schweißqualität erzielt, so dass die Einstellungen nur als Anhaltspunkte gesehen werden können. Auch ist es möglich, entsprechende Routinen in einem Speicher des Schweißgerätes zu hinterlegen, über welche eine automatische Einstellung der Anlage erfolgen kann. Beispielsweise können bei Abänderung eines Parameters von der Anlage die restlichen Parameter automatisch ermittelt und eingestellt werden, um wiederum die bestmöglichen Schweißergebnisse zu erreichen.

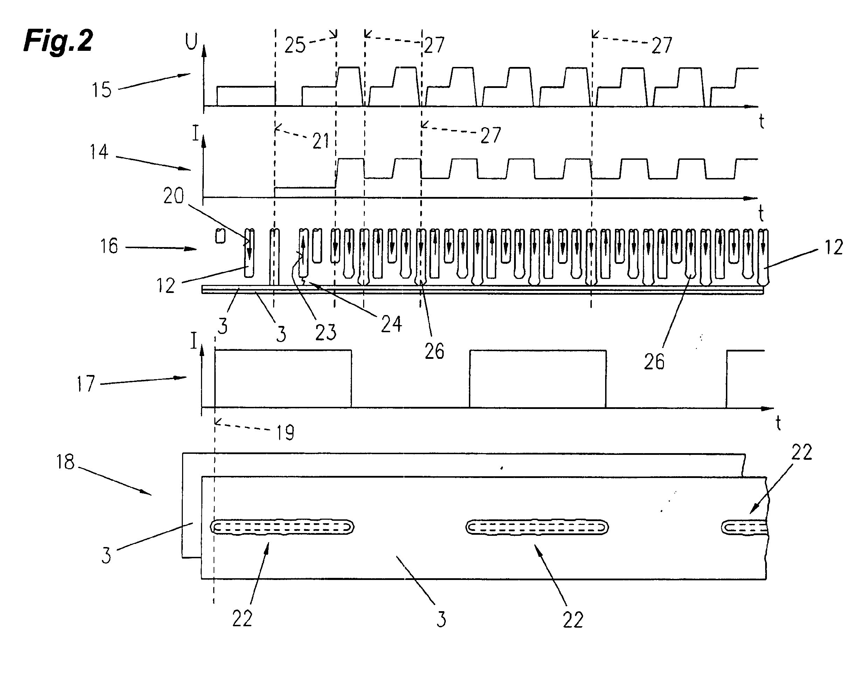

In Fig. 2 ist nun anhand eines Strom-Zeitdiagramms 14, eines Spannungs-Zeitdiagramms 15 und eines Bewegungs-Zeitdiagramms 16 der zeitliche Ablauf des Schutzgasschweißprozesses, insbesondere eines Kalt-Metall-Transfer-Schweißprozesses, vereinfacht und schematisch dargestellt. Weiters ist in einem eigenen Strom-Zeitdiagramm 17 der kombinierte Laserprozess dargestellt, sowie zur Erläuterung eine Draufsicht 18 auf die zu verschweißenden bzw. geschweißten Bleche 3. Die Diagramme des Schutzgasschweißprozesses sind dabei im Verhältnis zum Strom-Zeitdiagramm 17 des Lasers 13, bzw. zur Draufsicht 18 der Bleche 3 nicht maßstabsgetreu dargestellt. Die Diagramme dienen lediglich zur Veranschaulichung des Ablaufs, bzw. der zeitlichen Abfolge der Schutzgasschweißung für einen Teil einer Schweißnaht 22, wogegen beim Laserprozess eine Abbildung des zeitlichen Verlaufs zur Bildung der Schweißnähte 22 auf den Blechen 3 dargestellt ist.

Beim Beginn des Laser-Hybrid Schweißprozesses, das nicht unter dem Gegenstand des erfindungsgemässigen Verfahrens fällt, wird zum Zeitpunkt 19 der Laser 13 von der Lasereinheit 4 aktiviert, wodurch die Bleche 3 aufgeschmolzen, bzw. durchgeschweißt und dabei die Zinkbeschichtung der Bleche 3 verdampft werden. Im Nahbereich des Lasers 13, also in Schweißrichtung gesehen unmittelbar nach dem Laser 13, ist die Schutzgaseinheit 5 angeordnet. Nach dem Zünden des Lasers 13 oder gleichzeitig mit dem Aktivieren des Lasers 13 wird die Startphase für die Zündung des Lichtbogens beim Schutzgasschweißprozess durchgeführt, indem der Schweißdraht 12 zu einem Zeitpunkt 21 in Richtung des Werkstückes, also der Bleche 3, entsprechend Pfeil 20 bis zur Kontaktierung mit diesen bewegt wird. Bei der Kontaktierung des Schweißdrahtes 12 mit den Blechen 3 entsteht ein Kurzschluss. Danach wird eine Erhöhung des Stromes I derart durchgeführt, dass ein Aufschmelzen des Schweißdrahtes 12 verhindert wird. Durch den darauf folgenden Rückzug des Schweißdrahtes 12 in Richtung des Pfeiles 23 wird ein Lichtbogen 24 gezündet. Eine derartige Zünd- bzw. Startphase für den Lichtbogen 24 ist auch unter dem Begriff Lift-Arc-Zündung bekannt.

Zum Zeitpunkt 25 ist die Zünd- bzw. Startphase für den Lichtbogen 24 des Schutzgasschweißprozesses abgeschlossen und es erfolgt nun eine Erhöhung des Stromes I und zeitgleich eine Vorwärtsbewegung des Schweißdrahtes 12 in Richtung der Bleche 3.

Durch die Stromerhöhung bildet sich nunmehr am Ende des Schweißdrahtes 12 ein Tropfen 26 aus, welcher zum Zeitpunkt 27 bei einer neuerlichen Kontaktierung des Schweißdrahtes 12 mit den Blechen 3 bzw. mit dem Schmelzbad, welches durch den Lichtbogen 24 gebildet wird, und der anschließenden Rückwärtsbewegung des Schweißdrahtes 12 abgelöst wird. Während des Schutzgasschweißprozesses führt der Schweißdraht 12 eine ständige Vor-Rückwärtsbewegung durch. Da die Ablösung des Schweißtropfens 26 ohne Stromerhöhung stattfindet, wird mit diesem Prozess wenig Energie, insbesondere Wärmeenergie, in die Bleche 3 eingebracht. Selbstverständlich kann beim Schutzgasschweißprozess der Kalt-Metall-Transfer-Prozess auch mit einem anderen bekannten Schweißprozess, insbesondere mit einem Pulsschweißprozess, kombiniert und abwechselnd ein Kalt-Metall-Transfer-Prozess und ein Pulsprozess durchgeführt werden.

Wie bereits erwähnt, werden die Bleche 3 vom Laser 13 aufgeschmolzen, bzw. durchgeschweißt und weiters die Zinkbeschichtung der Bleche 3 gelöst bzw. verdampft. Mit dem darauf folgenden Schutzgasschweißprozess wird durch Einbringung von Zusatzmaterial die Laserschweißung bzw. die Laserspur aufgefüllt bzw. verschlossen. Dabei wird der Zusatzwerkstoff mit möglichst geringer Energieeinbringung zugeführt, da der Tropfenübergang im Kurzschluss ohne Stromerhöhung erfolgt, so dass die Bleche 3 wiederum dicht miteinander verschweißt sind. Durch diese spezielle Zusatzwerkstoffeinbringung über den Kalt-Metall-Transfer-Prozess wird erreicht, dass die Schweißraupe in ihrer Breite sehr schmal gehalten werden kann, da über den Schutzgasschweißprozess nur eine geringfügige zusätzliche Aufschmelzung der Bleche 3 verursacht wird.

Bei einem verzögerten Start des Schutzgasschweißprozesses kann im Schweißgerät bzw. in der Steuervorrichtung des Schweißgerätes ein Parameter eingestellt werden. Von der Steuervorrichtung wird aus dem eingegebenen Abstand zwischen der Lasereinheit 4 und der Schutzgaseinheit 5 und der definierten Schweißgeschwindigkeit die zeitliche Verzögerung berechnet und somit der Schutzgasschweißprozess automatisch zum Laser 13 aktiviert bzw. deaktiviert.

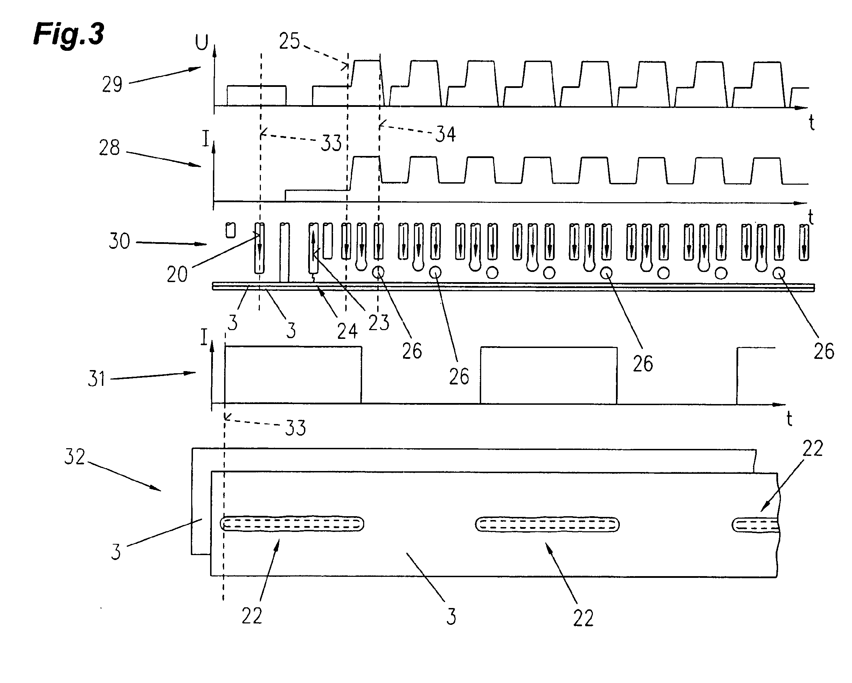

Fig. 3 zeigt ein Beispiel eines Laser-Hybrid-Prozesses, das nicht unter dem Gegenstand des erfindungsgemässigen Verfahrens fällt, mit einem Laser 13 und einem Puls-Schweißprozesses, wobei nunmehr anhand eines Strom-Zeitdiagramms 28, eines Spannungs-Zeitdiagramms 29 und eines Bewegungs-Zeitdiagramms 30 der zeitliche Ablauf des Schutzgasschweißprozesses, insbesondere eines Puls-Schweißprozesses, vereinfacht und schematisch dargestellt ist. Weiters ist in einem Strom-Zeitdiagramm 31 der Laserprozess dargestellt, sowie zur Erläuterung eine Draufsicht 32 auf die zu verschweißenden bzw. geschweißten Bleche 3. Hierbei sind die Diagramme des Schutzgasschweißprozesses dabei wiederum nicht maßstabsgetreu zum Strom-Zeitdiagramm 31 des Lasers 13, bzw. zu der Draufsicht 32 der Bleche 3, dargestellt und zeigen lediglich den Ablauf, bzw. die zeitliche Abfolge der Schutzgasschweißung für einen Teil einer Schweißnaht 22, wogegen beim Laserprozess eine Abbildung des zeitlichen Verlaufes zur Bildung der Schweißnähte 22 auf den Blechen 3 dargestellt ist.

Zum Zeitpunkt 33 wird der Laser 13 aktiviert und werden durch diesen die Bleche 3 aufgeschmolzen bzw. durchgeschweißt und die Zinkbeschichtung der Bleche 3 verdampft. Nach dem Zünden des Lasers 13 oder gleichzeitig mit dem Start des Lasers 13 wird die Zünd- bzw. Startphase des Schutzgasschweißprozesses durchgeführt, wobei der Schweißdraht 12 zu einem Zeitpunkt 34 in Richtung des Werkstückes, also der Bleche 3, in Richtung des Pfeiles 20 bis zur Kontaktierung mit diesen bewegt wird. Bei der Kontaktierung des Schweißdrahtes 12 mit den Blechen 3 entsteht ein Kurzschluss, wobei eine Erhöhung des Stromes I derart durchgeführt wird, dass ein Aufschmelzen des Schweißdrahtes 12 unterbunden wird. Durch den darauf folgenden Rückzug des Schweißdrahtes 12 in Richtung des Pfeiles 23 wird der Lichtbogen 24 gezündet, wobei der Schweißdraht 12 in eine definierte Ausgangsposition verfahren wird. Die Zünd- bzw. Startphase für den Schutzgasschweißprozess ist somit abgeschlossen. Wie bereits zuvor erwähnt, ist dieser Zünd- bzw. Startphase auch unter dem Begriff Lift-Arc-Zündung bekannt. Zum Zeitpunkt 25, also nach der Zünd- bzw. Startphase, erfolgt nun eine Erhöhung des Stromes I und zeitgleich eine kontinuierliche Vorwärtsbewegung des Schweißdrahtes 12 in Richtung der Bleche 3. Am Ende des Schweißdrahtes 12 bildet sich ein Tropfen 26, welcher sich zum Zeitpunkt 34 vom Schweißdraht 12 ablöst, wobei die Ablöse beispielsweise durch einen Stromimpuls eingeleitet werden kann. Durch Absenkung des Stromes I und erneutes Erhöhen wird wiederholt ein Tropfen 26 gebildet und in zeitlicher Abfolge vom Schweißdraht 12 abgelöst.

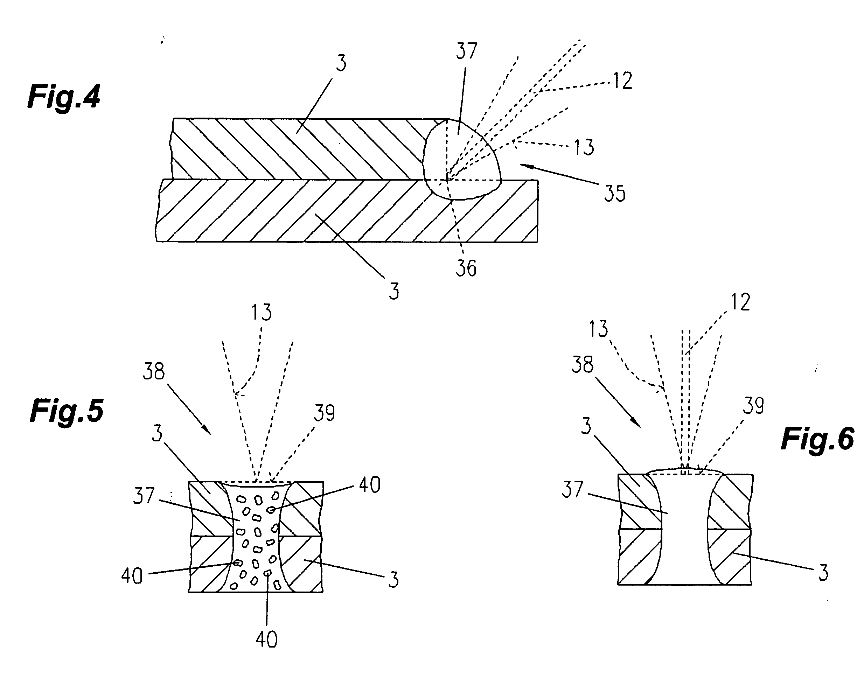

Die Fig. 4 bis 6 zeigen nunmehr in vereinfachter und schematischer Darstellung unterschiedliche Schweißnahtformen in geschnittener Seitenansicht, wobei in Fig. 5 eine mit einem herkömmlichen Schweißverfahren hergestellte Schweißnaht dargestellt ist. Natürlich sind sämtliche in der Schweißtechnik bekannte Nahtformen mit dem erfindungsgemäßen Schweißverfahren möglich, allerdings werden in der Beschreibung lediglich zwei verschiedene Nahtformen erläutert, da die übrigen Nahtformen aus dieser Beschreibung ableitbar sind.

In Fig. 4 ist ein Schnitt einer Kehlnaht 35 vereinfacht dargestellt. Die Bleche 3 sind überlappend und spaltfrei bzw. annähernd spaltfrei, angeordnet. Der Laser 13 wird auf einen Schnittpunkt 36 der Bleche 3 gerichtet. Die Laserenergie bzw. Intensität und die Schutzgasschweißparameter richten sich dabei nach den zu verschweißenden Blechen 3, und können beispielsweise vom Benutzer an einer Laser-Stromquelle und am Schweißgerät bzw. der Steuervorrichtung des Schweißgerätes eingestellt werden. Dabei wird mittels des Lasers 13 ein Einbrand in die Bleche 3 durchgeführt, worauf der auf den Laserprozess 13 folgende Schutzgasschweißprozess mittels des Zusatzwerkstoffes, also des Schweißdrahtes 12, eine Schweißnaht 37 in Form der Kehlnaht 35 über die Bleche 3 zieht und somit den Laser-Einbrand vollständig verschließt. Der Übersicht halber sind der Laser 13 und der Schweißdraht 12 strichliert dargestellt. Der Vorteil besteht darin, dass der eingesetzte Schweißdraht 12 einen Zinkgehalt aufweist, durch welchen die Zinkbeschichtung der Bleche 3 gebunden wird und sich dadurch kein Zink "aufstauen" kann. Bei den aus dem Stand der Technik bekannten Schweißverfahren für verzinkte Bleche 3 wird das Zink vor dem Laser 13 und/oder dem Schutzgasschweißverfahren "hergeschoben", wobei diese Zinkpolster dann sprichwörtlich explodieren können. Dadurch können Einschlüsse bzw. Löcher oder Krater in der Schweißnaht 37 entstehen, die nachträglich mit einer separaten Schweißung nachbearbeitet werden müssen, um eine dichte Schweißnaht zu schaffen. Bei diesem Verfahren wird dagegen durch die Bindung des Zinks eine stabile, bzw. stabilere und dichte Schweißnaht 37 geschaffen. Es entstehen also keine Einschlüsse, Löcher bzw. Krater in der Schweißnaht 37 und es wird somit eine dichte Schweißnaht in einem Arbeitsgang geschaffen.

Fig. 5 zeigt ein Beispiel aus dem Stand der Technik, bei dem ein Schnitt einer I-Naht 38, welche nur mit einem Laser-Schweißprozess geschweißt wird, vereinfacht dargestellt. Dabei ist der Laser 13 bzw. der Brennpunkt des Lasers 3 bevorzugt auf eine Oberkante 39 bzw. Oberfläche des oben aufliegenden Bleches 3 gerichtet. In dem dargestellten Ausführungsbeispiel wird lediglich der Laser 13 eingesetzt, wie dies üblicherweise der Fall ist. Aufgrund der Zinkbeschichtung der Bleche 3 bildet sich während des Schweißens mittels des Lasers 13 ein Zinkpolster vor dem Laser 13, durch welchen Einschlüsse 40, Löcher bzw. Krater in der Schweißnaht 37 entstehen. Dadurch wird die Qualität der Schweißnaht 37 jedoch wesentlich beeinflusst, insbesondere verschlechtert.

Fig. 6 zeigt nunmehr eine mit dem Laser-Hybrid Schweißverfahren, das nicht unter dem Gegenstand des erfindungsgemässigen Verfahrens fällt, geschweißte I-Naht 38. Der Laser 13 ist, wie eingehend beschrieben, voreilend, wobei der Brennpunkt des Lasers 13 bevorzugt an der Oberfläche 39 des ersten Bleches 3 liegt. Mittels des Lasers 13 werden die Bleche 3 aufgeschmolzen, bzw. durchgeschweißt, und der darauf folgende Schutzgasschweißprozess legt eine einschlussfreie Schweißnaht 37 darüber. Dies wird dadurch erreicht, dass die Zusatzwerkstoffe des Schweißdrahtes 12 in vorteilhafter Weise mit der Beschichtung der Bleche 3 bzw. dem Schmelzbad zusammenwirken. Dadurch wird eine im Wesentlichen verbesserte Schweißnaht 37 ermöglicht, bei welcher in einem Arbeitsgang eine stabile und dichte Schweißnaht 37 gewährleistet ist.

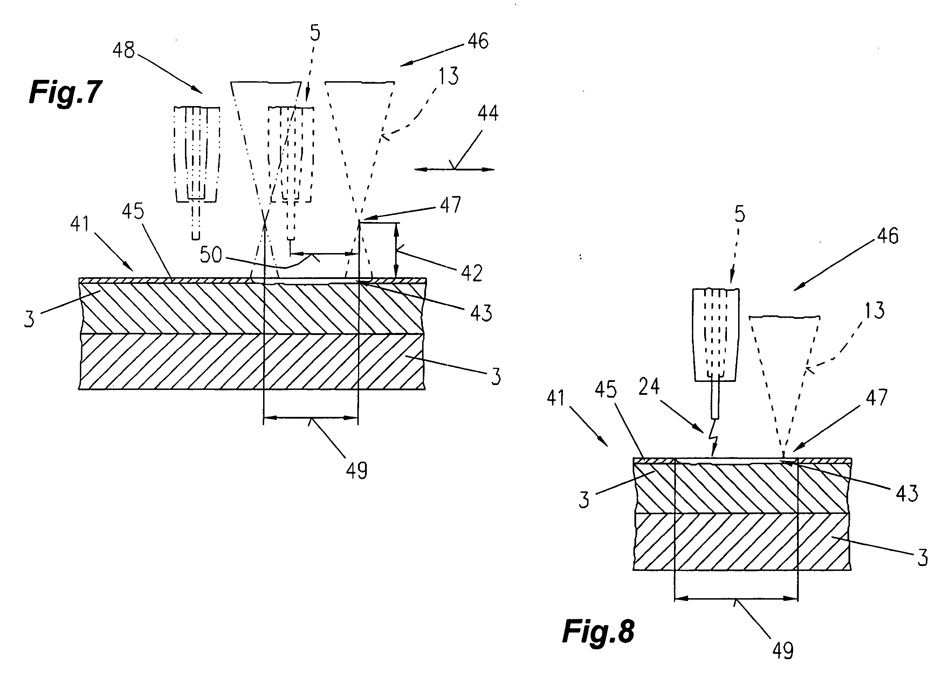

Fig. 7 und Fig. 8 zeigen nunmehr eine Startphase und den Start für den Laser-Hybrid-Schweißprozess gemäß der Erfindung, in schematischer und vereinfachter Darstellung. Dabei wird zumindest ein Laserprozess mit Hilfe des Lasers 13 und ein Schutzgasschweißprozess, insbesondere mit einer MIG/MAG-Schutzgaseinheit 5, durchgeführt. Der Laser 13 eilt dem Schutzgasschweißprozess vor, wobei der Schutzgasschweißprozess im Nahbereich des Lasers 13 positioniert ist.

Über den Schutzgasschweißprozess wird ein Zusatzwerkstoff bzw. ein Schweißdraht 12 an eine Schweißstelle zugeführt.

Beim Start des Laserprozesses, wenn sich der Laser-Hybrid-Schweißkopf 1 in seiner Ausgangsposition 46 befindet, wird der Brennpunkt 47 des Lasers 13 in einem definierten Abstand 42 zur Oberfläche 41 des Bleches 3 eingestellt, worauf der Laser 13 eine voreinstellbare Längsbewegung 44 in Richtung der Schutzgaseinheit 5, also bis zu einer Umkehrposition 48, und anschließend zur Ausgangsposition 46 zurück durchführt. Während der Vor-Rückbewegung des Lasers 13, also während der Längsbewegung 44, wie schematisch durch einen Doppelpfeil dargestellt, wird die Laserleistung derart geregelt, dass eine Beschichtung 45 des Bleches 3 verdampft bzw. geschmolzen wird und somit die Oberfläche 41 des obenauf liegenden Bleches 3 durch den Laser 13 von Verunreinigungen und/oder Beschichtungen befreit wird.

Vorteilhafterweise ist der Abstand 42 des Brennpunktes 47 vom Blech 3 so gewählt, dass der Laser 13 eine möglichst breite Spur am Blech 3 ausbildet, wobei diese Spur anschließend für den Schutzgasschweißprozess als Zündfläche 43 dient, wie dies nachstehend noch genauer erläutert wird. Bei einem geringen Abstand 42 bzw. bei einer Anordnung des Brennpunktes 47 an der Oberfläche 41 des Bleches 3 wird eine schmale Laserspur geschaffen, wogegen bei einem größeren Abstand 42 zur Oberfläche 41 des Bleches 3 eine breitere Laserspur bzw. Zündfläche 43 erreicht wird. Dabei ist jedoch sicherzustellen, dass der Brennpunkt 47 so gewählt wird, dass eine Aufschmelzung bzw. Verdampfung zumindest der Beschichtung 45 stattfindet.

Der Laser-Hybrid-Schweißkopf 1 führt nach Aktivierung des Lasers 13 eine voreinstellbare Längsbewegung 44 in Richtung der Schutzgaseinheit 5 und anschließend zur Ausgangsposition 46 zurück durch, wobei der Laser-Hybrid-Schweißkopf 1, insbesondere der Laser 13 und die Schutzgaseinheit 5 zur besseren Erläuterung in der Ausgangsposition strichliert und der Endposition des Reinigungsverfahrens strichpunktiert dargestellt ist. Der Laser 13 legt bei der Längsbewegung 44 eine voreingestellte bzw. einstellbare Distanz 49 zurück. Die Distanz 49 ist dabei in Abhängigkeit eines Abstandes 50 zwischen dem Laser 13 und der Schutzgaseinheit 5 gewählt, so dass bei einem anschließenden Zünden eines Lichtbogens 24, bei dem sich der Laser-Hybrid-Schweißkopf 1 in seiner Ausgangsstellung 46 befindet, dieser im Bereich des aufgeschmolzenen Bleches 3, also der Zündfläche 43, gezündet wird. Der Laser 13 bzw. der Laser-Hybrid-Schweißkopf 1 führt also zumindest eine Längsbewegung 44 bis zur Schutzgaseinheit 5 durch. Um eine sichere Zündung des Schutzgasschweißprozesses zu gewährleisten, kann die Längsbewegung 44 auch weiter als bis zur Schutzgaseinheit 5 durchgeführt werden. Dabei wird sichergestellt, dass bei einer Zündung der Lichtbogen 24 im Bereich der geschaffenen Zündfläche 43 gezündet wird.

Nach Beendigung der Startphase, wenn sich der Laser-Hybrid-Schweißkopf 1 in seiner Ausgangsposition 46 befindet, wird nunmehr der Schweißprozess gestartet. Beispielsweise werden gleichzeitig oder aufeinander folgend der Laserprozess und der Schutzgasschweißprozess eingeleitet. Dabei erfolgt die Zündung des Lichtbogens 24 auf der durch den Laser 13 vorbereiteten Zündfläche 43. Bevorzugt beträgt dabei die Distanz 50 zwischen dem Laserprozess und dem Schweißprozess zwischen 0 und 15 mm, bevorzugt zwischen 0 und 6 mm. Hierbei ist es möglich, dass gleichzeitig mit oder anschließend an den Start des Schutzgasschweißprozesses die Laserleistung auf die voreingestellte Leistung für den anschließend durchzuführenden Schweißprozess verändert wird.

Die Bewegung des Laser-Hybrid-Schweißbrenners 1 kann über einen Roboter erfolgen. Selbstverständlich kann diese Startphase auch bei einem handgeführten Laser-Hybrid-Brenner verwendet werden, wobei hierzu der Benutzer zuerst die Längsbewegung 44 mit dem Laserprozess alleine durchführt und anschließend den handgeführten Laser-Hybrid-Brenner oberhalb der geschaffenen Zündfläche 43 positioniert, so dass der tatsächliche Schweißprozess eingeleitet werden kann.

## Patentansprüche

1. Verfahren zum Starten eines Laser-Hybrid-Schweißprozesses zum Schweißen von beschichteten Blechen (3), wobei zumindest ein Laserprozess mit einem Laser (13) und ein Schutzgasschweißprozess mit einer Schutzgaseinheit (5) durchgeführt wird, und der Laserprozess dem Schutzgasschweißprozess voreilt, und der Schutzgasschweißprozess im Nahbereich des Lasers (13) positioniert wird, wobei über den Schutzgasschweißprozess ein Zusatzwerkstoff an die Schweißstelle zugeführt wird, **dadurch gekennzeichnet, dass** beim Start des Laserprozesses der Brennpunkt (47) des Lasers (13) in einem definierten Abstand (42) zur Oberfläche (41) des vom Laser (13) gesehenen ersten Bleches (3) eingestellt wird und der Laser (13) eine voreinstellbare Längsbewegung (44) in Richtung der Schutzgaseinheit (5) und anschließend zur Ausgangsposition (46) zurück durchführt, wobei während der Vor-Rückbewegung des Lasers (13) die Laserleistung derart geregelt wird, dass die Beschichtung (45) der Bleche (3) verdampft bzw. geschmolzen wird und somit die Oberfläche (41) des vom Laser (13) gesehenen ersten Bleches durch den Laser (13) von Verunreinigungen und/oder Beschichtungen befreit wird.

2. Verfahren nach Anspruch 1, **dadurch gekennzeichnet, dass** der Brennpunkt (47) des Lasers (13) nach der Vor-/Rückbewegung des Lasers (13) nach Beendigung der Startphase, auf eine für das Laserschweißverfahren eingestellte bzw. definierte Distanz (42) zur Oberfläche (41) des vom Laser (13) gesehenen ersten Bleches (3) verändert wird.

3. Verfahren nach Anspruch 1 oder 2, **dadurch gekennzeichnet, dass** nach Beendigung der Startphase der Schutzgasschweißprozess gestartet wird und eine Zündung des Lichtbogens (24) erfolgt.

4. Verfahren nach Anspruch 3, dass gleichzeitig mit oder anschließend an dem Start des Schutzgasschweißprozesses die Laserleistung auf die voreingestellte Leistung für den anschließend durchzuführenden Schweißprozess verändert wird.

5. Verfahren nach einem der Ansprüche 1 bis 14, **dadurch gekennzeichnet, dass** die zurückzulegende Distanz (49) für die Längsbewegung (44) in der Startphase in Abhängigkeit eines Abstandes (50) zwischen dem Laser (13) und der Schutzgaseinheit (5) gewählt wird, so dass der Lichtbogen (24) im Bereich des durch den Laser (13) aufgeschmolzenen Bleches (3) gezündet wird.

6. Verfahren nach Anspruch 5, **dadurch gekennzeichnet, dass** die Distanz (49) zwischen 0 und 15 mm, bevorzugt zwischen 0 und 6 mm, beträgt.

7. Verfahren nach einem der Ansprüche 1 bis 6, **dadurch gekennzeichnet, dass** die Bewegung des Laser-Hybrid-Schweißbrenners (1) robotergesteuert erfolgt.

## Claims

1. A method for starting a laser hybrid welding process for welding coated sheet metals (3), wherein at least one laser process with a laser (13) and one shielding gas welding process with a shielding gas unit (5) are carried out with the laser process preceding the shielding gas welding process, and the shielding gas welding process is positioned in the vicinity of the laser (13), wherein a filler material is supplied to the welding site via the shielding gas welding process, **characterized in that** the focus (47) of the laser (13), at the start of the laser process, is adjusted at a defined distance (42) relative to the surface (41) of the first sheet metal (3), viewed from the laser (13), and that the laser (13) performs a pread-justable longitudinal movement (44) in the direction of the shielding gas unit (5) and, subsequently, back to the starting position (46), wherein, during the forward/rearward movement of the laser (13), the laser power is controlled in a manner that the coating (45) of the sheet metals (3) is evaporated or melted and, hence, the surface (41) of the first sheet metal, viewed from the laser (13), is freed of impurities and/or coatings by the laser (13).

2. A method according to claim 1, **characterized in that** after the forward/rearward movement of the laser (13), upon completion of the starting phase, the focus (47) of the laser (13) is altered to a distance (42) adjusted or defined for the laser welding process, relative to the surface (41) of the first sheet metal (3), viewed from the laser (13).

3. A method according to claim 1 or 2, **characterized in that** the shielding gas welding process is started, and ignition of the electric arc (24) is effected, upon completion of the starting phase.

4. A method according to claim 3, **characterized in that** the laser power, simultaneously with or subsequently to the start of the shielding gas welding process, is altered to the preadjusted power for the welding process to be carried out subsequently.

5. A method according to any one of claims 1 to 4, **characterized in that** the distance (49) to be covered for the longitudinal movement (44) in the starting phase is chosen as a function of a distance (50) between the laser (13) and the shielding gas unit (5) such that the electric arc (24) is ignited in the region of the sheet metal (3) melted by the laser (13).

6. A method according to claim 5, **characterized in that** said distance (49) amounts to between 0 and 15mm, preferably between 0 and 6mm.

7. A method according to any one of claims 1 to 6, **characterized in that** movement of the laser hybrid welding torch (1) is robot-controlled.

## Revendications

1. Procédé permettant de démarrer un processus de soudage hybride au laser, destiné à souder des tôles revêtues (3), dans lequel au moins un processus laser à l'aide d'un laser (13) et un processus de soudage sous protection gazeuse avec une unité de protection gazeuse (5) sont réalisés, et le processus laser précède le processus de soudage sous protection gazeuse, et le processus de soudage sous protection gazeuse est réalisé dans une zone proche du laser (13), dans lequel, par l'intermédiaire du processus de soudage sous protection gazeuse, une substance additionnelle est acheminée vers le lieu de soudage, **caractérisé en ce que**, lors du démarrage du processus laser, le foyer électronique (47) du laser (13) est réglé à une distance définie (42) de la surface (41) de la première tôle (3) rencontrée par le laser (13), et le laser (13) effectue de nouveau un déplacement longitudinal (44) pouvant être prédéfini en direction de l'unité de protection gazeuse (5), puis revient à la position initiale (46), sachant que, pendant le mouvement de va-et-vient du laser (13), la puissance du laser est réglée de telle sorte que le revêtement (45) des tôles (3) est vaporisé ou amené à fondre et, ainsi, la surface (41) de la première tôle rencontrée par le laser (13) est libérée des impuretés et / ou revêtements grâce au laser (13).

2. Procédé selon la revendication 1, **caractérisé en ce que** le foyer électronique (47) du laser, suite au mouvement de va-et-vient du laser (13), une fois la phase initiale terminée, se décale d'une distance (42) définie ou réglée pour le procédé de soudage laser vers la surface (41) de la première tôle (3) rencontrée par le laser (13).

3. Procédé selon la revendication 1 ou 2, **caractérisé en ce que** à la fin de la phase initiale le processus de soudage sous protection gazeuse débute, et il se produit une activation de l'arc électrique (24).

4. Procédé selon la revendication 3, **caractérisé en ce que**, simultanément avec ou suite au début du processus de soudage sous protection gazeuse, la puissance laser passe à la puissance prédéfinie pour le processus de soudage devant être réalisé ultérieurement.

5. Procédé selon l'une quelconque des revendications 1 à 4, **caractérisé en ce que** la distance (49) à parcourir pour le déplacement longitudinal (44) lors de la phase initiale est choisie en fonction d'une distance (50) existant entre le laser (13) et l'unité de protection gazeuse (5), de telle sorte que l'arc électrique (24) est activé dans la zone de la tôle (3) amenée à fondre par le laser (13).

6. Procédé selon la revendication 5, **caractérisé en ce que** la distance (49) est comprise entre 0 et 15 mm, de préférence entre 0 et 6 mm.

7. Procédé selon l'une quelconque des revendications 1 à 6, **caractérisé en ce que** le déplacement du chalumeau de soudage hybride laser (1) est commandé à l'aide d'un robot.
